# EUROPÄISCHE PATENTSCHRIFT

(11) **EP 0 672 579 B1**
(45) Veröffentlichungstag und Bekanntmachung des Hinweises auf die Patenterteilung: **09.12.1998**
(21) Anmeldenummer: 95103526.0
(22) Anmeldetag: 11.03.1995
(51) Int. Cl.: B62K 21/24, B62K 15/00

(54) **Vorrichtung zur lösbaren Befestigung einer Fahrradlenkerbaugruppe**
Device for detachable steering of a modular bicycle
Dispositif pour la fixation détachable d'un guidage modulaire de bicyclette

(30) Priorität: 17.03.1994 DE 9404509 U
(43) Veröffentlichungstag der Anmeldung: 20.09.1995
(73) Patentinhaber: Nickel, Herbert, D-40489 Düsseldorf (DE)
(72) Erfinder: Nickel, Herbert, D-40489 Düsseldorf (DE)
(74) Vertreter: Stenger, Watzke & Ring Patentanwälte

(56) Entgegenhaltungen:
- DE-A- 1 680 568
- DE-B- 1 961 989
- DE-C- 605 009
- US-A- 3 874 701
- US-A- 4 390 300

## Beschreibung

Die Erfindung betrifft eine Vorrichtung zur lösbaren Befestigung einer Fahrradlenkerbaugruppe, die mit einem Lenkerrohr in ein Steuerrohr eines Fahrradrahmens einsetzbar und mittels einer an einem Lenkerrohrende angeordneten Klemmvorrichtung mit dem Gabelrohr einer Vorderradgabel verbindbar ist, wobei die Klemmvorrichtung über eine Verbindungsstange von einer am anderen Lenkerrohrende angeordneten Betätigungsvorrichtung betätigbar ist.

Derartige gattungsgemäße Vorrichtungen zur lösbaren Befestigung einer Fahrradlenkerbaugruppe sind bekannt. Beispielsweise ist am in das Steuerrohr einsetzbaren Lenkerrohrende eine Spannbuchse oder ein Klemmkonus eingesetzt, welche durch Eindrehen eines Bolzens gegen die untere Lenkerrohrkante verspannt und dabei aufgeweitet werden. Die Verbindungsstange hat dann wenigstens im unteren Bereich ein Gewinde und die Betätigung erfolgt durch Drehen eines am oberen, aus dem Steuerrohr herausragenden Lenkerrohrende angeordneten Schraubenkopf, der am oberen Ende der Verbindungsstange ausgebildet ist. Durch die Aufweitung der Spannbuchse wird die Lenkerbaugruppe sicher und in einer relativ zum Rahmen vorbestimmten Position befestigt.

Ein besonderer Nachteil der vorbekannten Vorrichtung besteht darin, daß zum Lösen der Befestigungsvorrichtung immer ein Werkzeug verwendet werden muß. Da die Lenkerbaugruppe durch die Klemmvorrichtung sowohl in ihrer Höhe als auch in ihrer Verdrehposition relativ zum Rahmen festgesetzt wird, werden die Klemmvorrichtungen üblicherweise mit einem hohen Drehmoment angezogen, um eine ungewünschte Lenkerverstellung zu vermeiden. Daher ist regelmäßig die Verwendung von Werkzeug erforderlich, um die Lenkerbaugruppe zu lösen oder wieder zu befestigen.

Heutzutage werden Fahrräder häufig transportiert, beispielsweise auf Erholungs- oder Urlaubsfahrten auf Anhängern, dem Autodach oder mit der Bahn. Es hat sich herausgestellt, daß die regelmäßig querstehenden Lenker den Transport einer größeren Anzahl von Fahrrädern behindern, so daß immer ein umständliches Lösen der Klemmvorrichtung durch die Verwendung von Werkzeug zur Verdrehung der Lenkerbaugruppe erforderlich ist.

Darüber hinaus kann es wünschenswert sein, den Lenker aus Sicherheitsgründen zu verstellen, zu verdrehen oder ganz abzunehmen. Beispielsweise kann ein verdrehter Lenker eine hervorragende Diebstahlsicherung darstellen. Aber auch zu diesem Zweck ist die Mitführung und Anwendung von Werkzeug erforderlich.

Schließlich läßt sich die vorbekannte Betätigungsvorrichtung nicht sichern, so daß jeder Dritte, der über ein entsprechendes Werkzeug verfügt, den Lenker ebenfalls lösen, verstellen und befestigen kann.

Selbstverständlich ist ein einfaches Lösen einer Fahrradlenkerbaugruppe auch zu Reparatur- und Montagezwecken wünschenswert. Darüber hinaus ist unter dem Sicherheitsaspekt eine Sicherung des Lenkers gegen Verdrehung anzustreben.

Zwar sind auch aus dem Fahrradbereich hebelbetätigbare Klemmvorrichtungen bekannt, jedoch ist im Falle einer in ein Steuerrohr eines Fahrradrahmens einsetzbaren Klemmvorrichtung, die mit dem unteren Ende eines Lenkerrohrs zusammenwirkt, notwendig, daß die Klemmvorrichtung relativ zum Lenkerrohrende richtig positioniert wird. Dies geschieht durch Drehen der Verbindungsstange, an deren Betätigungsende in erfindungsgemäßer Weise ein Hebel angeordnet ist. Da dieser Hebel eine bestimmte Ausrichtung zum Lenker bzw. zum Lenkervorbau haben muß, um fixierbar zu sein, was auch für alle vorbekannten Bestätigungsvorrichtungen gilt, ist nicht immer gewährleistet, daß bei der gewünschten Hebelposition auch die Klemmvorrichtung relativ zum Lenkerrohr richtig positioniert ist. In diesem Falle würde keine ausreichende Verklemmung möglich sein, das heißt, der Lenker wäre verdrehbar oder höhenverstellbar, obwohl der Hebel in seiner Fixierposition ruht. Bei bekannten hebelbetätigbaren Klemmvorrichtungen wirken die Hebel zudem gegenüber federnd beweglichen Unterlagen, so daß definierte Klemmkräfte ohnehin nicht erzielbar sind.

Aus der US-A-4390300 ist eine gattungsgemäße Vorrichtung zur lösbaren Befestigung an einer Fahrradlenkerbaugruppe bekannt, wobei zur Fixierung ein am Ende eines Stangenelementes angeordneter Querstift in das Lenkerrohr eingesetzt ist. Die Stange weist ein Federelement auf, welches die Stange gegen die Lenkerrohrwandung derart um einen Drehpunkt belastet, daß der Blockierstift fixierend einrastet. Durch Ziehen der Stange gegen die Federkraft wird der Blockierstift aus Rastöffnungen herausgezogen. Dieses Ziehen erfolgt mittels eines Hebelelementes, dessen oberes Ende aus dem oberen Lenkerrohr in Form eines ergreifbaren Knopfes herausschaut. Diese Lösung, die nicht eine gattungsgemäße Klemmvorrichtung in der Vorderradgabel verwendet, ist vergleichsweise aufwendig, denn die relativ zueinander verschiebbaren Rohrelemente müssen Rastlöcher aufweisen. Darüber hinaus ist der Verstellknopf schwer zu greifen und nicht fixierbar, so daß ein unbeabsichtigtes Lösen jederzeit möglich ist. Darüber hinaus ist eine Funktionssicherheit bei Ermüdung der Feder nicht gewährleistet.

Davon ausgehend liegt der Erfindung die **Aufgabe** zugrunde, eine Vorrichtung zur lösbaren Befestigung einer Fahrradlenkerbaugruppe der gattungsgemäßen Art dahingehend zu verbessern, daß mit einfachen und wirtschaftlich vertretbaren Mitteln die Verstellbarkeit des Lenkers zu Transport-, Montage- und/oder Sicherungszwecken erheblich vereinfacht wird und darüber hinaus kein besonderes Werkzeug eingesetzt werden muß.

Zur technischen **Lösung** dieser Aufgabe wird die gattungsgemäße Vorrichtung dadurch verbessert, daß die Betätigungsvorrichtung ein Exzenterhebel ist, wobei zwischen dem Hebel und dem dem Hebel zugewandten Lenkerrohrende wenigstens ein höhenverstellbares Anschlagelement angeordnet ist.

Durch die erfindungsgemäße Ausgestaltung ist es möglich, die Verbindungsstange mittels des Hebels in der Höhe zu verstellen und damit auch die Klemmvorrichtung zu verschieben. Anstelle des Einsatzes von Werkzeug zum Drehen der Betätigungsvorrichtung wird einfach der Hebel gelöst oder gespannt, und damit die Verbindungsstange angehoben oder gesenkt. Zwangsläufig wird die Klemmvorrichtung ge- bzw. entspannt, so daß die Lenkerbaugruppe gelöst bzw. befestigt werden kann. In erfindungsgemäßer Weise wird angegeben, daß der Hebel ein Exzenterhebel ist. Ein derartiger Exzenterhebel, der seine exzentrische Drehachse am oberen Ende der Verbindungsstange hat und sich gegen das Lenkerrohr abstützt, stellt eine einfache Befestigungsvorrichtung dar. Diese kann ohne Werkzeug zu Zwecken der Lenkerverstellung verwendet werden. Die Verbindungsstange ist in vorteilhafter Weise eine Zugstange und verfügt gemäß einem weiteren Vorschlag der Erfindung über eine Höhensicherung. Dadurch wird ermöglicht, daß der Hebel nach Betätigung der Klemmvorrichtung abnehmbar ist, da die Zugstange in ihrer derzeitigen Position gesichert ist. Zur Sicherung können Knebel, Muttern oder dergleichen eingesetzt werden.

Dadurch, daß zwischen dem Hebel und dem Lenkerrohrende, das heißt üblicherweise zwischen dem Hebel und dem nicht nachgebenden Lenkervorbau, erfindungsgemäß ein Anschlagelement angeordnet ist, kann einerseits durch Drehen des Hebels die Klemmvorrichtung relativ zu dem unteren Lenkerrohrende so positioniert werden, daß durch die Betätigung des Hebels eine sichere Klemmung erfolgt, andererseits kann dem Hebel ein entsprechender Betätigungswiderstand entgegengesetzt werden, der sich praktisch in der erforderlichen Betätigungshöhe auswirkt, um die Verbindungsstange durch die Betätigung des in der gewünschten Position befindlichen Hebels bewegt.

Als Anschlagelement kommt in vorteilhafter Weise eine Mutter in Frage, welche auf ein entsprechendes, am Lenkervorbau angeordnetes Gewinde aufgeschraubt wird. Dabei kann es sich um eine gerändelte Mutter handeln, ebenso wie um eine Flügelmutter, die jeweils von Hand betätigt werden können. Die Mutter ist kappenartig aufgebaut und wird von der Verbindungsstange durchragt. Weiterhin kann die Kappe mit einem Sicherungselement versehen sein, welches mit dem Hebel in seiner fixierten Position zusammenwirkt, so daß die Kappen dann nicht mehr gedreht werden kann.

In vorteilhafter Weise ist der Hebel absperrbar. Bei einem am oberen Ende einer Zugstange fest angeordneten Exzenterhebel kann an dessen freien Ende ein Schloß angeordnet sein, welches mit einem Schließbolzen in der abgesenkten Hebelposition zusammenwirkt. Ein derart fixierter Lenker läßt sich nur nach der Schloßöffnung betätigen. Selbstverständlich kann an dem Hebel auch ein einfacher Bügel angeordnet sein, der mit einem rahmenfesten Bügel zusammenwirkt, so daß sich beide Bügel durch ein herkömmliches Fahrradschloß oder ein sonstiges Sicherheitsschloß verbinden lassen.

Die Klemmvorrichtung ist in vorteilhafter Weise ein Kippbolzen bzw. gemäß einem alternativen Vorschlag eine Exzenterbuchse. Unter Kippbolzen wird im Sinne der vorliegenden Erfindung ein Bolzen verstanden, der, wenn er angezogen und damit mit seinem Ende gegen die untere Lenkerrohröffnung gezogen wird, aus seiner zentrierten Lage herauskippt und damit gegen die Innenrohrwandung des Gabelrohres preßt. Eine Exzenterbuchse im Sinne der vorliegenden Erfindung ist eine Buchse mit einer abgeschrägten Wirkfläche, die gegen ein entsprechend abgeschrägtes Lenkerrohrende aufläuft und somit in eine vom Lenkerrohr aus gesehen exzentrische Position auswandert, wenn die Verbindungsstange nach oben gezogen wird.

Gemäß einem weiteren Vorschlag der Erfindung ist rahmenseitig ein Rastring angeordnet, der mit einem an der Lenkerbaugruppe angeordneten Nocken zusammenwirkt. Der Rastring weist mehrere Rastöffnungen auf, so daß der Lenker in unterschiedlichen Verdrehpositionen relativ zum Rahmen fixiert werden kann. Der lenkerbaugruppenseitige Nocken ist zu diesem Zweck in vorteilhafter Weise als Nockenstange ausgebildet.

Die erfindungsgemäße Vorrichtung ermöglicht bei Verwendung eines wirtschaftlich und montageseitig einfachen Aufbaus eine einfache Lenkerverstellung. So kann der Lenker zu Transportzwecken einfach verdreht werden. Zu diesem Zwecke wird durch Anheben des Hebels die Klemmvorrichtung gelöst und die Lenkerbaugruppe ist aus ihrer querstehenden Position in eine in Fahrtrichtung gesehen längsstehende Position verdrehbar. Durch Umlegen des Hebels kann die Lenkerbaugruppe in dieser Position fixiert werden. Damit ergibt sich eine geeignete Transportposition, darüber hinaus aber auch eine geeignete Diebstahlsicherung, da mit einem längsstehenden Lenker nur schlecht gefahren werden kann. Bei Verwendung eines Schlosses zur Sicherung des Hebels wird die Diebstahlsicherung noch verbessert. Darüber hinaus verhindert die Verwendung des rahmenseitigen Rastringes mit den lenkerbaugruppenseitigen Nocken überhaupt eine Lenkerbetätigung. Gemäß einer vorteilhaften Ausgestaltung der Erfindung ist am Schloß ein Schutzschild angeordnet, durch welches die Klemmschraube der Vorbauklemme abgedeckt wird. Dadurch wird ein Lösen der Klemmschraube verhindert.

Ohne besonderes Werkzeug mitführen und verwenden zu müssen, können somit auch technisch nicht begabte Personen die Lenkerbaugruppe einfach wunschgemäß oder aus Sicherheitsgründen verstellen. Durch die Verwendung einer am Lenkerrohr angeordneten Positionsanzeige wird die Betätigung durch technisch nicht interessierte Personen noch erleichtert, da diese sich nur die Höhenpositionsanzeige, beispielsweise einen Farbring, merken müssen, um den Lenker wieder in die ursprüngliche Position zurückstellen zu können.

Weitere Vorteile und Merkmale der Erfindung ergeben sich aus der folgenden Beschreibung anhand der Figuren. Dabei zeigen:
- Figur 1: eine schematische Darstellung einer Fahrradlenkerbaugruppe im Grundaufbau;
- Figur 2: eine Darstellung der Fahrradlenkerbaugruppe gemäß Figur 1 von der Seite mit dem Schließhebel in geöffneter Position;
- Figur 3: eine Darstellung gemäß Figur 2 mit weiteren Ausführungen und
- Figur 4: eine Darstellung der Fahrradlenkerbaugruppe von der Seite mit geschlossenem Exzenterhebel.

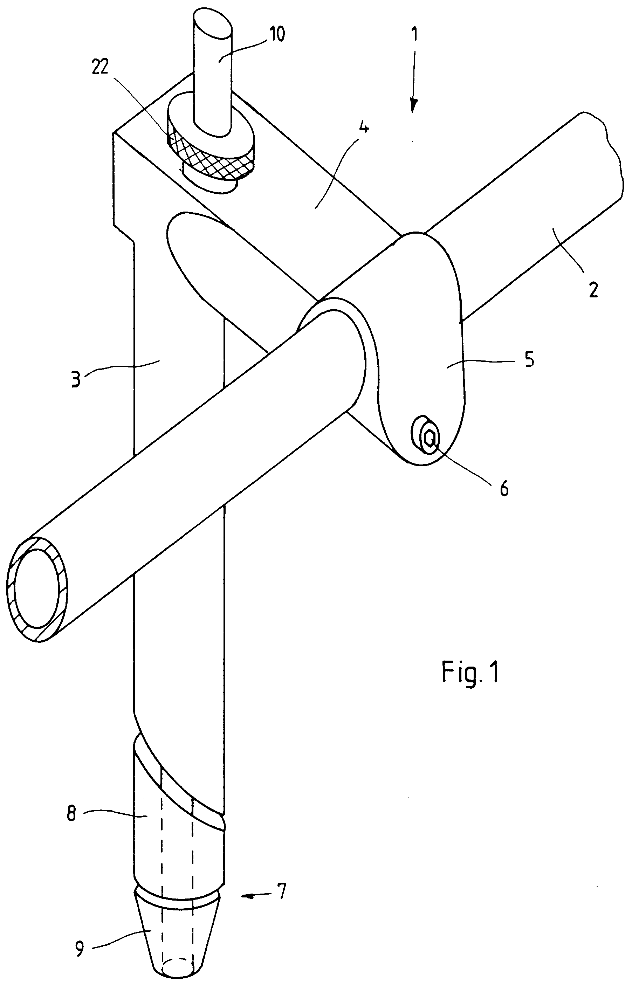

Die in Figur 1 gezeigte Fahrradlenkerbaugruppe 1 besteht aus einem Lenker 2, der an einem Lenkerrohr 3 über den Vorbau 4 verbunden ist. Zu diesem Zwecke wird der Lenker 2 in die am Vorbau 4 angeordnete Vorbauklemme 5 eingesetzt und durch Anziehen der Klemmschraube 6 verklemmt. Das dem Vorbau 4 entgegengesetzte Ende des Lenkerrohrs 3 wird in an sich bekannter Weise in das Steuerrohr eines Rahmens eingesetzt. Zur Fixierung ist unten die Klemmvorrichtung 7 angeordnet, bestehend aus einer Exzenterbuchse 8 und einer Spannmutter 9. Die das Lenkerrohr durchragende Verbindungsstange 10 steht mit der Spannmutter in Verbindung, vorzugsweise in Schraubverbindung. Durch Anheben der Verbindungsstange 10 wird die Exzenterbuchse gegen das untere Ende des Lenkerrohrs 3 gezogen und aufgrund der in Verbindung kommenden beiden schrägen Kanten zum Lenkerrohr exzentrisch verschoben, so daß eine Verklemmung im Gabelrohr erfolgt.

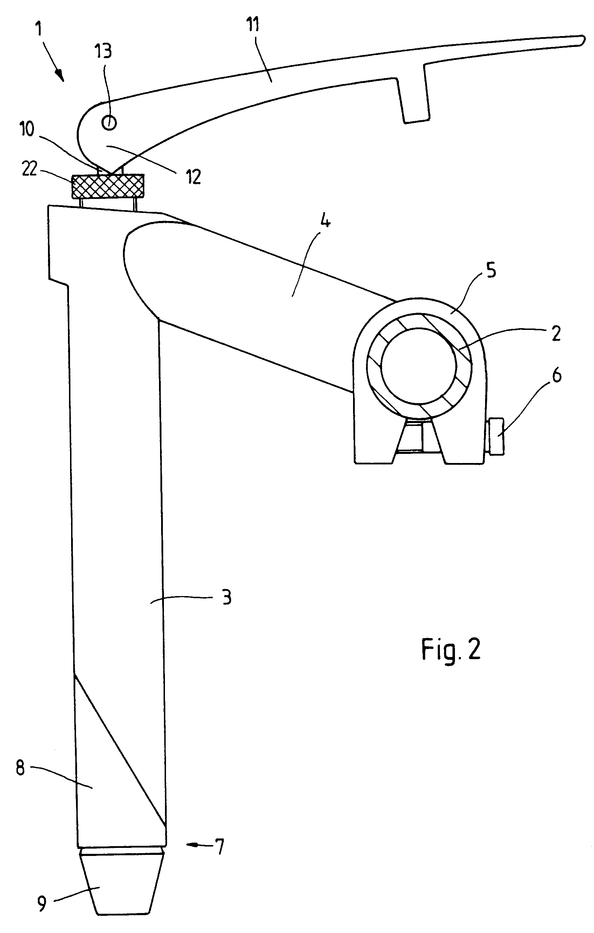

Der in Figur 2 gezeigte Exzenterhebel 11 dient zur Betätigung der Klemmvorrichtung 7, indem der Exzenterhebel mit dem daran angeordneten Exzenter 12 mittels einer Schwenkachse 13 an der Verbindungsstange angeordnet ist. Die Schwenkachse 13 ist gegen Herausziehen oder -schlagen gesichert. Wird der Exzenterhebel 11 nach unten bewegt, läuft der Exzenter 12 an der oberen Lenkerrohrkante ab und spannt die Klemmvorrichtung. Bei Bedarf kann zum Ablauf des Exzenters eine Scheibe eingesetzt sein.

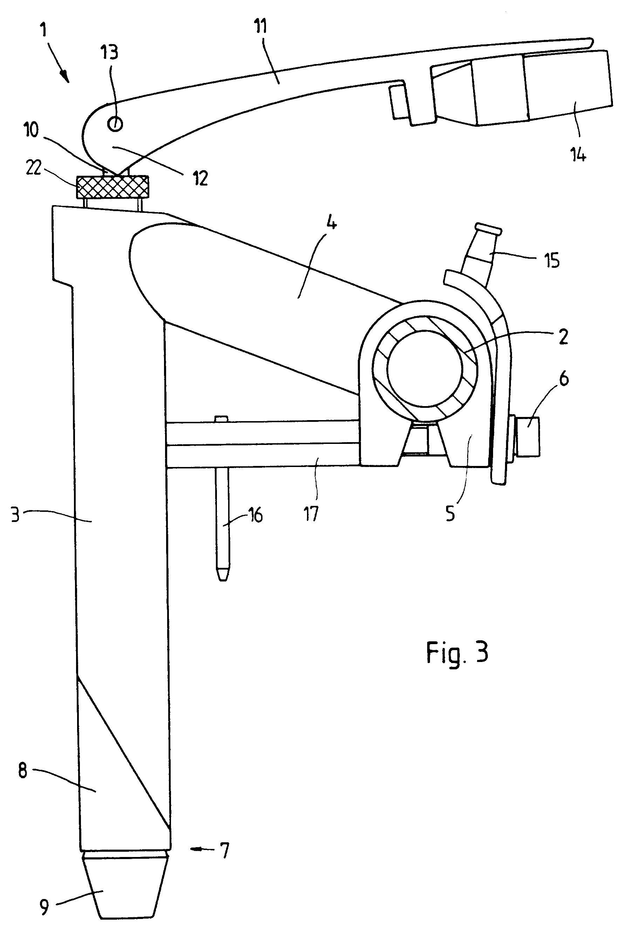

In Figur 3 ist eine erweiterte Ausführungsform gezeigt, wobei am anderen Ende des Exzenterhebels 11 ein Schloß 14 angeordnet ist, welches mit einem entsprechend angeordneten Schließnocken 15 zusammenwirkt. Der Schließnocken 15 ist im gezeigten Ausführungsbeispiel an einem geeigneten Blech angeordnet, welches mit der Klemmschraube 6 der Vorbauklemme 5 an der Fahrradlenkerbaugruppe 1 befestigt ist. Weiterhin kann mit der gleichen Schraube 6 auch der Halter 17 für eine Nockenstange 16 befestigt werden. Diese Nockenstange dient zur Verdrehsicherung des Lenkers, so daß mit dem fixierten Lenker keine Lenkbewegung mehr erfolgen kann.

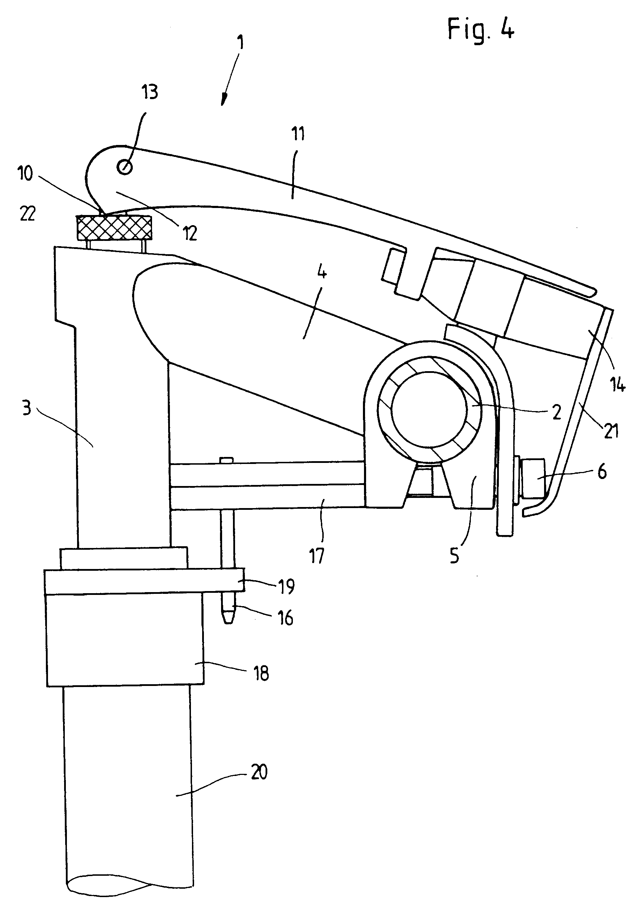

In Figur 4 ist der Exzenterhebel in seiner geschlossenen Position und die Nockenstange in ihrer im Rastring 19 eingesetzten Position gezeigt.

Nach Schließen des Exzenterhebels 11 wirkt das Schloß 14 mit dem Schließnocken 15 zusammen und der Lenker ist in der jeweiligen befestigten Position fixiert. Durch den Exzenter 12 ist die Verbindungsstange 10 angehoben und die Exzenterbuchse 8 durch die Spannmutter 9 in eine zum Lenkerrohr 3 exzentrische Position bewegt, so daß der Lenker im Gabelrohr fixiert ist. Wird die Lenkerbaugruppe entsprechend abgesenkt, kommt die Nockenstange 16 mit dem an einer Buchse 18 angeordneten Rastring 19 in Verbindung, so daß eine Lenkbewegung nicht mehr möglich ist. Die Buchse 18 ist zu diesem Zwecke am Rahmen 20 befestigt. Ein am Schloß 14 angeordnetes Schutzschild 21 verhindert, daß die Klemmschraube 6 gelöst werden kann.

In den Figuren ist auch dargestellt, daß auf dem Lenkervorbau ein Gewinde ausgebildet ist, auf welches eine Anschlagmutter aufgeschraubt ist. Diese Anschlagmutter 22 ist ein kappenartiges Element, welches von der Zugstange durchragt wird. Durch diese Anschlagmutter läßt sich der Abstand zum Exzenter des Exzenterhebels 11 variieren, indem die Mutter gedreht wird. So kann beispielsweise bei einer inzwischen etwas ausgeleierten Klemmvorrichtung die Hubhöhe der Zugstange 10 vergrößert werden. Auch läßt sich die Hubhöhe bzw. der Exzenteranschlag in Abhängigkeit von der Exzenterhebelpositionierung entsprechend variieren. Es ist somit nicht möglich, daß der Exzenterhebel eine falsche Drehposition hat, um die Klemmvorrichtung wirksam klemmen zu lassen, oder andererseits die Klemmvorrichtung nicht ausreichend klemmt, wenn der Exzenterhebel in seiner gewünschten ausgerichteten Drehposition angeordnet ist. Vielmehr läßt sich durch die Anschlagmutter 22 die Abstimmung beider Positionen problemlos erreichen. Die Anschlagmutter 22 kann wie im gezeigten Ausführungsbeispiel mit einem gerändelten Rand versehen sein, oder alternativ als Flügelmutter oder sonstwie mit der Hand betätigbares Element ausgebildet sein. Auch kann die Anschlagmutter 22 mit einer nicht gezeigten Verdrehsicherung versehen sein, beispielsweise mit einem Schlitz, in welchem der Exzenter in seiner Fixierposition eingreift, um ein willkürliches Lösen der Anschlagmutter und damit möglicherweise der Klemmvorrichtung zu verhindern.

Mit der erfindungsgemäßen Betätigungsvorrichtung können auch technisch nicht interessierte Personen die Lenkerbaugruppe einfach verstellen. Durch einfaches Aufschließen des Sicherungsschlosses und Anheben des Exzenterhebels ist die Lenkerbaugruppe gelöst. Sie kann nun in ihrer Höhenposition und in ihrer Verdrehposition eingestellt werden. Somit kann die Fahrradlenkerbaugruppe 1 zu Transport- oder Sicherheitszwecken längsgestellt oder wieder in ihre Funktionsposition zurückgestellt werden. Am Lenkerrohr können nicht gezeigte Positionsindikatoren in Form von Farbringen oder dergleichen angeordnet sein. Zur Diebstahl- oder Transportsicherung kann die Lenkerbaugruppe in ihre tiefste Position gedrückt und durch das Zusammenwirken der Nockenstange 16 und dem Rastring 19 eine Lenkbewegung unmöglich gemacht werden.

### Bezugszeichenliste

- 1: Fahrradlenkerbaugruppe
- 2: Lenker
- 3: Lenkerrohr
- 4: Vorbau
- 5: Vorbauklemme
- 6: Klemmschraube
- 7: Klemmvorrichtung
- 8: Exzenterbuchse
- 9: Spannmutter
- 10: Zugstange
- 11: Exzenterhebel
- 12: Exzenter
- 13: Schwenkachse
- 14: Schloß
- 15: Schließnocken
- 16: Nockenstange
- 17: Halter
- 18: Buchse
- 19: Rastring
- 20: Rahmen
- 21: Schutzschild
- 22: Anschlagmutter

## Patentansprüche

1. Vorrichtung zur lösbaren Befestigung einer Fahrradlenkerbaugruppe (1), die mit einem Lenkerrohr (3) in ein Steuerrohr eines Fahrradrahmens einsetzbar und mittels einer an einem Lenkerrohrende angeordneten Klemmvorrichtung (7) mit dem Gabelrohr einer Vorderradgabel verbindbar ist, wobei die Klemmvorrichtung über eine Verbindungsstange (10) von einer am anderen Lenkerrohrende angeordneten Betätigungsvorrichtung betätigbar ist, dadurch gekennzeichnet, daß die Betätigungsvorrichtung ein Exzenterhebel (11) ist, wobei zwischen dem Exzenterhebel (11) und dem dem Exzenterhebel (11) zugewandten Lenkerrohrende wenigstens ein höhenverstellbares Anschlagelement angeordnet ist.

2. Vorrichtung nach Anspruch 1, dadurch gekennzeichnet, daß die Verbindungsstange eine Zugstange ist.

3. Vorrichtung nach Anspruch 2, dadurch gekennzeichnet, daß die Zugstange eine Positionssicherung aufweist.

4. Vorrichtung nach einem der vorhergehenden Ansprüche, dadurch gekennzeichnet, daß der Hebel abnehmbar ist.

5. Vorrichtung nach einem der vorhergehenden Ansprüche, dadurch gekennzeichnet, daß der Hebel absperrbar ist.

6. Vorrichtung nach Anspruch 5, dadurch gekennzeichnet, daß zum Absperren ein Schloß angeordnet ist.

7. Vorrichtung nach einem der vorhergehenden Ansprüche, dadurch gekennzeichnet, daß die Klemmvorrichtung ein Kippbolzen ist.

8. Vorrichtung nach einem der Ansprüche 1 bis 6, dadurch gekennzeichnet, daß die Klemmvorrichtung eine Exzenterbuchse ist.

9. Vorrichtung nach einem der vorhergehenden Ansprüche, dadurch gekennzeichnet, daß an der Fahrradlenkerbaugruppe (1) ein Nocken angeordnet ist, der mit einem fahrradseitigen Rastring (19) zusammenwirkt.

10. Vorrichtung nach Anspruch 9, dadurch gekennzeichnet, daß der Nocken eine Nockenstange (16) ist.

11. Vorrichtung nach einem der vorhergehenden Ansprüche, dadurch gekennzeichnet, daß am Lenkerrohr (3) eine Positionsanzeige für die Einsetztiefe angeordnet ist.

12. Vorrichtung nach einem der vorhergehenden Ansprüche, dadurch gekennzeichnet, daß am Schloß (14) ein Schutzschild (21) zur Abdeckung der Klemmschraube (6) der Vorbauklemme (5) angeordnet ist.

13. Vorrichtung nach einem der vorhergehenden Ansprüche, dadurch gekennzeichnet, daß das Anschlagelement eine Anschlagmutter (22) ist.

## Claims

1. Device for the releasable fastening of a bicycle-handlebar assembly (1), which can be introduced into a control tube of a bicycle frame by way of a handlebar tube (3) and can be connected to the fork tube of a front fork by means of a clamping device (7) arranged at one handlebar-tube end, it being the case that the clamping device can be actuated via a connecting rod (10) of an actuating device arranged at the other handlebar-tube end, characterized in that the actuating device is an eccentric lever (11), at least one vertically adjustable stop element being arranged between the eccentric lever (11) and that handlebar-tube end which is directed towards the eccentric lever (11).

2. Device according to Claim 1, characterized in that the connecting rod is a pull rod.

3. Device according to Claim 2, characterized in that the pull rod has a position-securing means.

4. Device according to one of the preceding claims, characterized in that the lever can be removed.

5. Device according to one of the preceding claims, characterized in that the lever can be locked.

6. Device according to Claim 5, characterized in that a lock is provided for locking purposes.

7. Device according to one of the preceding claims, characterized in that the clamping device is a swing bolt.

8. Device according to one of Claims 1 to 6, characterized in that the clamping device is an eccentric bushing.

9. Device according to one of the preceding claims, characterized in that a cam which interacts with a bicycle-mounted latching ring (19) is arranged on the bicycle-handlebar assembly (1).

10. Device according to Claim 9, characterized in that the cam is a cam rod (16).

11. Device according to one of the preceding claims, characterized in that a position indicator for indicating the insertion depth is arranged on the handlebar tube (3).

12. Device according to one of the preceding claims, characterized in that a protective plate (21) for covering the clamping screw (6) of the front-part clamp (5) is arranged on the lock (14).

13. Device according to one of the preceding claims, characterized in that the stop element is a stop nut (22).

## Revendications

1. Dispositif pour la fixation détachable d'un groupe de construction de guidon de bicyclette (1), susceptible d'être inséré, avec un tube de guidon (3), dans un tube de commande d'un cadre pour bicyclette, et susceptible d'être relié au tube de fourche d'une fourche de roue avant, au moyen d'un dispositif de serrage (7) disposé sur une extrémité du tube de guidon, le dispositif de serrage étant actionnable par l'intermédiaire d'une tige de liaison (10), depuis un dispositif d'actionnement disposé sur l'autre extrémité de tube de guidon, caractérisé en ce que le dispositif d'actionnement est un levier excentrique (11), entre le levier excentrique (11) et l'extrémité de tube de guidon tournée vers le levier excentrique (11) étant disposé au moins un élément de butée réglable en hauteur.

2. Dispositif selon la revendication 1, caractérisé en ce que la tige de liaison est une tige de traction.

3. Dispositif selon la revendication 2, caractérisé en ce que la tige de traction présente une sécurité de position.

4. Dispositif selon l'une des revendications précédentes, caractérisé en ce que le levier est démontable.

5. Dispositif selon l'une des revendications précédentes, caractérisé en ce que le levier est susceptible d'être bloqué.

6. Dispositif selon la revendication 5, caractérisé en ce qu'une serrure est disposée pour assurer le blocage.

7. Dispositif selon l'une des revendications précédentes, caractérisé en ce que le dispositif de serrage est un boulon basculant.

8. Dispositif selon l'une des revendications 1 à 6, caractérisé en ce que le dispositif de serrage est une douille excentrique.

9. Dispositif selon l'une des revendications précédentes, caractérisé en ce que, sur le groupe de construction de guidon de bicyclette (1), est disposé un ergot coopérant avec un anneau d'encliquetage (19) situé côté bicyclette.

10. Dispositif selon la revendication 9, caractérisé en ce que l'ergot est une tige d'ergot (16).

11. Dispositif selon l'une des revendications précédentes, caractérisé en ce que, sur le tube de guidon (3), est disposé un indicateur de position destiné à indiquer la profondeur d'insertion.

12. Dispositif selon l'une des revendications précédentes, caractérisé en ce que, sur la serrure (14), est disposé un bouclier de protection (21) destiné à recouvrir la vis de serrage (6) de la pince d'avant-corps (5).

13. Dispositif selon l'une des revendications précédentes, caractérisé en ce que l'élément de butée est un écrou de butée (22).
